# EUROPEAN PATENT SPECIFICATION

(11) **EP 4 496 027 B1**
(45) Date of publication and mention of the grant of the patent: **14.10.2026**
(21) Application number: 23792211.7
(22) Date of filing: 20.04.2023
(51) Int. Cl.: C01G 45/22, H01M 4/136, H01M 4/58, H01M 4/1315, H01M 4/1397, H01M 4/13915, H01M 4/02

(54) **POSITIVE ELECTRODE ACTIVE MATERIAL, AND POSITIVE ELECTRODE AND LITHIUM SECONDARY BATTERY, EACH INCLUDING SAME**
POSITIVELEKTRODENAKTIVMATERIAL UND POSITIVELEKTRODE UND LITHIUMSEKUNDÄRBATTERIE DAMIT
MATÉRIAU ACTIF D'ÉLECTRODE POSITIVE, ET ÉLECTRODE POSITIVE ET BATTERIE SECONDAIRE AU LITHIUM, COMPRENANT CHACUNE CELUI-CI

(30) Priority: 22.04.2022 KR 20220050421
(43) Date of publication of application: 22.01.2025
(73) Proprietor: LG Energy Solution, Ltd., Seoul 07335 (KR); Ulsan National Institute of Science and Technology (UNIST), Eonyang-eup Ulju-gun Ulsan 44919 (KR)
(72) Inventor: PARK, Byung Chun, Daejeon 34122 (KR); JO, Chi Ho, Daejeon 34122 (KR); LEE, Eun Ryeol, Ulju-gun Ulsan 44919 (KR); SEO, Dong Hwa, Ulju-gun Ulsan 44919 (KR); PARK, Sang Wook, Ulju-gun Ulsan 44919 (KR)
(74) Representative: Hoffmann Eitle
(86) International application number: PCT/KR2023/005394
(87) International publication number: WO 2023/204637

(56) References cited:
- EP-A1- 3 846 260
- WO-A1-2020/049803
- JP-A- 2021 174 637
- KR-A- 20070 117 827
- KR-A- 20190 133 773
- KR-A- 20200 055 771
- US-A1- 2019 181 443
- US-A1- 2020 091 514
- US-B2- 10 886 529
- US-B2- 11 271 200

## Description

### TECHNICAL FIELD

The present invention relates to a positive electrode active material, and a positive electrode and a lithium secondary battery which include the same, and more particularly, to a manganese-based positive electrode active material having a disordered rock-salt structure, and a positive electrode and a lithium secondary battery which include the same.

### BACKGROUND ART

Recently, interests in energy storage technologies have been increasingly grown, and efforts for research and development of electrochemical devices have been gradually materialized as the application of the energy storage technologies is expanded to the energy of mobile phones, camcorders, notebook PCs, and even to electric vehicles.

There emerges an interest in development of rechargeable secondary batteries among these electrochemical devices, and, particularly, lithium secondary batteries developed in the early 1990's are spotlighted because the lithium secondary batteries are advantageous in that they have higher operating voltage and significantly higher energy density.

A lithium secondary battery is generally prepared by a method in which, after an electrode assembly is prepared by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte that becomes a medium for transferring the lithium ions is injected thereinto and the battery case is then sealed. The non-aqueous electrolyte is generally composed of a lithium salt and an organic solvent capable of dissolving the lithium salt.

Recently, lithium composite transition metal oxides, such as lithium nickel-cobalt-manganese-aluminum oxide or layered-structured lithium nickel-cobalt-manganese oxide with high energy density, have mainly been used as a positive electrode active material as demand for secondary batteries with high energy density, such as batteries for electric vehicles, has increased. However, since prices of transition metals, such as nickel and cobalt, soar as the demand for secondary batteries has rapidly increased, price competitiveness is reduced. Also, an increase in energy density of the secondary battery, in which the conventional lithium composite transition metal oxide is used, has reached its limit. Accordingly, an attempt has been made to develop a positive electrode active material based on manganese (Mn) with excellent price competitiveness.

As the Mn-based positive electrode active material that has been actively researched recently, there is an overlithiated manganese-rich positive electrode active material (e.g. Li_{1.2}Ni_{0.13}Mn_{0.54}Co_{0.13}O₂), in which a Li₂MnO₃ rock-salt structure and a LiMO₂ layered structure are mixed, or a positive electrode active material having a partial spinel-disordered rock-salt structure (e.g. Li_{1.68}Mn_{1.6}O_{3.7}F_{0.3}). With respect to the overlithiated manganese-rich positive electrode active material, it has excellent capacity characteristics, but its use is limited due to low rate capability caused by structural characteristics and there is a problem in that life characteristics are degraded due to an irreversible oxygen-redox reaction, and, with respect to the positive electrode active material having a partial spinel-disordered rock-salt structure, it has excellent rate capability and capacity characteristics, but there is a problem in that it still exhibits low life characteristics.

US 11 271 200 B2 describes a positive-electrode active material containing a lithium composite oxide, wherein the lithium composite oxide is a multiphase mixture.
EP 3 846 260 A1 describes a positive electrode active material including a lithium composite oxide having a crystal structure belonging to the space group Fd-3m.

US 10 886 529 B2 describes a positive electrode active material including a lithium composite oxide and a covering material that covers a surface of the lithium composite oxide. The covering material has an electron conductivity of 106 S/m or less. The lithium composite oxide is a multiphase mixture including a first phase having a first crystal structure that belongs to a space group Fm-3m and a second phase having a second crystal structure that belongs to a space group other than a space group Fm-3m.

US 2020/091514 A1 describes a positive electrode active material containing a lithium composite oxide containing fluorine and oxygen. The lithium composite oxide satisfies 1<Zs/Za<8, where Zs represents a first ratio of a molar quantity of fluorine to a total molar quantity of fluorine and oxygen in XPS of the lithium composite oxide, and Za represents a second ratio of a molar quantity of fluorine to a total molar quantity of fluorine and oxygen in an average composition of the lithium composite oxide.

US 2019/181443 A1 describes a positive-electrode active material contains a compound represented by LiₓMe_{y}O_{α}X_{β}, where Me denotes one or more elements selected from the group consisting of Mn, Ni, Co, Fe, Al, Sn, Cu, Nb, Mo, Bi, Ti, V, Cr, Y, Zr, Zn, Na, K, Ca, Mg, Pt, Au, Ag, Ru, Ta, W, La, Ce, Pr, Sm, Eu, Dy, and Er, X denotes two or more elements selected from the group consisting of F, Cl, Br, I, N, and S, and x, y, α, and β satisfy 0.75≤x≤2.25, 0.75≤y≤1.50, 1≤α<3, and 0<β≤2, respectively. A crystal structure of the compound belongs to a space group Fm-3m.

### DISCLOSURE OF THE INVENTION

### TECHNICAL PROBLEM

An aspect of the present invention provides a novel positive electrode active material which is based on relatively inexpensive manganese and has excellent capacity characteristics, rate capability, and life characteristics by including a disordered rock-salt structure.

### TECHNICAL SOLUTION

According to an aspect of the present invention, there is provided a positive electrode active material including a lithium manganese-based oxyhalide which has a composition represented by [Formula 1-2] and has a disordered rock-salt structure.

[Formula 1-2] Li_{0.5+a2}Mn_{b2}M_{c2}O₂₋ₑ₂Xₑ₂

In [Formula 1-2], M is at least one selected from the group consisting of Ti, Ni, Zr, V, Co, Sn, Fe, Ir, Cr, Pb, and Ru, X is a halogen element, and 0<a2<0.5, 0.5≤b2<1, 0<c2≤b2/2, and 0.1≤e2≤0.5.

A molar ratio of cation elements : anion elements in the lithium manganese-based oxyhalide may be in a range of 0.75 : 1 to 1 : 1.

The lithium manganese-based oxyhalide may have a primary particle size of 50 nm to 300 nm.

The lithium manganese-based oxyhalide having the composition represented by [Formula 1-2] may have a multi-phase structure in which a disordered rock-salt structure, a layered rock-salt structure, and a spinel structure are mixed, and, in this case, a ratio of a spinel phase in the lithium manganese-based oxyhalide is 75% or less, preferably, 25% to 75%.

Also, the lithium manganese-based oxyhalide represented by [Formula 1-2] may have an I(400)_{R}/I(111)_{S}, a ratio of (400) plane peak intensity I(400)_{R} to (111) plane peak intensity I(111)_{S}, of 1 or more.

According to another aspect of the present invention, there is provided a positive electrode including the positive electrode active material according to the present invention and a lithium secondary battery including the positive electrode.

### ADVANTAGEOUS EFFECTS

A positive electrode active material according to the present invention includes a lithium manganese-based oxyhalide which has a disordered rock-salt structure and is doped with element M (where M is at least one selected from the group consisting of titanium (Ti), nickel (Ni), zirconium (Zr), vanadium (V), cobalt (Co), tin (Sn), iron (Fe), iridium (Ir), chromium (Cr), lead (Pb), and ruthenium (Ru)). In a case in which the lithium manganese-based oxyhalide having the disordered rock-salt structure is doped with the element M as in the present invention, since structural characteristics are controlled to mitigate Jahn-Teller effect (Jahn-Teller distortion) caused by Mn³⁺ and improve reversibility of oxygen redox during charge and discharge, cycle characteristics are significantly improved.

Also, since the lithium manganese-based oxyhalide, in which some of oxygen atoms are substituted with halogen, may reduce the oxidation number of a transition metal due to the presence of the large halogen element (F⁻) with a low negative charge, an oxidation/reduction amount of the stable transition metal may be increased to achieve better rate capability and cycle characteristics than a conventional overlithiated manganese-based oxide.

### BRIEF DESCRIPTION OF THE DRAWINGS

FIG. 1 is a scanning electron microscope (SEM) image of a lithium manganese-based oxyhalide synthesized by Reference Example 1.
FIG. 2 is an SEM image of a lithium manganese-based oxyhalide synthesized by Reference Example 2.
FIG. 3 is an SEM image of a lithium manganese-based oxyhalide synthesized by Comparative Example.
FIG. 4 is an SEM image of a lithium manganese-based oxyhalide synthesized by Example 3.
FIG. 5 is an SEM image of a lithium manganese-based oxyhalide synthesized by Example 4.
FIG. 6 is a graph illustrating life characteristics of lithium secondary batteries in which the lithium manganese-based oxyhalides synthesized in Reference Examples 1 and 2 are used.
FIG. 7 is a graph illustrating life characteristics of lithium secondary batteries in which the lithium manganese-based oxyhalides synthesized in Comparative Example and Examples 3 and 4 are used.
FIG. 8(A) is a high-resolution transmission electron microscope (HR-TEM) image of the lithium manganese-based oxyhalide synthesized by Example 4, and FIG. 8(B) is results of measuring selected area electron diffraction (SAED) patterns of the lithium manganese-based oxyhalide synthesized by Example 4.
FIG. 9 is X-ray diffraction (XRD) data of the lithium manganese-based oxyhalide synthesized by Comparative Example.
FIG. 10 is XRD data of the lithium manganese-based oxyhalide synthesized by Example 3.
FIG. 11 is XRD data of the lithium manganese-based oxyhalide synthesized by Example 4.

### MODE FOR CARRYING OUT THE INVENTION

Hereinafter, the present invention will be described in more detail.

### Positive Electrode Active Material

A positive electrode active material according to the present invention includes a lithium manganese-based oxyhalide which has a disordered rock-salt structure and is doped with element M (where M is at least one selected from the group consisting of titanium (Ti), nickel (Ni), zirconium (Zr), vanadium (V), cobalt (Co), tin (Sn), iron (Fe), iridium (Ir), chromium (Cr), lead (Pb), and ruthenium (Ru)).

Conventionally used positive electrode active materials generally had a crystal structure that was composed of an ordered layered structure, in which a lithium layer and a transition metal layer were separated, or an ordered spinel structure. However, these conventional positive electrode active materials had a problem in that expensive transition metals, such as nickel or cobalt, must be used and an improvement in energy density was limited because phase transition occurred when deintercalation of lithium from the lithium layer was increased. In contrast, with respect to the positive electrode active material having a disordered rock-salt structure as in the present invention, since there is no separate lithium layer, it is advantageous in that higher energy density may be achieved, because the occurrence of the phase transition due to the deintercalation of the lithium is less, and a loss of a conductive network due to an increase in volume of the positive electrode active material may be minimized because a change in the volume due to charge and discharge is low.

Specifically, the lithium manganese-based oxyhalide also disclosed herein may have a composition represented by [Formula 1] below.

[Formula 1] Li_{0.5+a}Mn_{b}M_{c}O_{d}Xₑ

In [Formula 1], M may be at least one selected from the group consisting of Ti, Ni, Zr, V, Co, Sn, Fe, Ir, Cr, Pb, and Ru, and may preferably be Ti. In a case in which the lithium manganese-based oxyhalide having a disordered rock-salt structure is doped with the element M as in the present invention, since Jahn-Teller effect (Jahn-Teller distortion) caused by Mn³⁺ is mitigated and reversibility of oxygen redox is improved during charge and discharge through structural control, an effect of improving life characteristics may be obtained.

X may be a halogen element, preferably fluorine (F), chlorine (Cl), bromine (Br), and/or iodine (I), and more preferably F. In a case in which some of oxygen atoms are substituted with the halogen, since charge balance between cations and anions may be achieved, even in a case in which lithium more than stoichiometry is added, due to the presence of the halogen element having higher electronegativity than oxygen, better rate capability and cycle characteristics than those of a conventional overlithiated manganese-based oxide may be achieved.

0.5+a represents an atomic ratio of lithium (Li) in the lithium manganese-based oxyhalide, wherein a may satisfy 0<a≤0.7, 0.02≤a≤0.7, 0.02≤a≤0.5, 0<a≤0.2, 0.02≤a≤0.2, or 0.2≤a≤0.7. It is desirable that the positive electrode active material also disclosed herein includes Li in excess of a stoichiometric ratio. In a case in which Li is included in an amount greater than the stoichiometric ratio, high-capacity characteristics are improved, and an effect of improving the rate capability is more excellent due to an increase in the amount of lithium with 0 (0-TM) or 1 (1-TM) transition metal based on 4 tetrahedral faces. However, since excessive lithium may deteriorate overall conduction properties by reducing electronic conductivity of the material, it is desirable that the atomic ratio of the Li in the lithium manganese-based oxyhalide is 1.2 or less.

b represents an atomic ratio of manganese (Mn) in the lithium manganese-based oxyhalide, wherein b may satisfy 0.5≤b<1, 0.5≤b≤0.9, 0.6≤b≤0.8, 0.5≤b<1, or 0.5≤b≤0.9. When the atomic ratio of the manganese satisfies the above range, excellent capacity characteristics may be achieved.

c represents an atomic ratio of doping element M in the lithium manganese-based oxyhalide, wherein c may satisfy 0<c≤b/2, 0.05≤c≤b/2, or 0.1≤c≤b/2. When the atomic ratio of the doping element M satisfies the above range, a positive electrode active material with excellent capacity characteristics, rate capability, and life characteristics may be achieved. If an amount of the doping element M is excessively increased, capacity and rate capability of the positive electrode active material may be reduced, and if the amount of the doping element M is excessively small, the effect of improving the life characteristics is insignificant.

d represents an atomic ratio of oxygen in the lithium manganese-based oxyhalide, wherein d may satisfy 1.5≤d≤1.9, 1.7≤d≤1.9, 1.5≤d≤1.7, or 1.75≤d≤1.85.

e represents an atomic ratio of halogen element X in the lithium manganese-based oxyhalide, wherein e may satisfy 0.1≤e≤0.5, 0.1≤e≤0.4, or 0.1≤e≤0.3. When the atomic ratio of the halogen element X satisfies the above range, the charge balance between the cations and the anions may be appropriately maintained to achieve excellent rate capability and cycle characteristics.

In Formula 1, d+e≤2, and d+e may preferably be 2.

In the lithium manganese-based oxyhalide, an atomic ratio of cation elements (i.e., Li, Mn, and element M):anion elements (i.e., oxygen and halogen element) may be in a range of 0.75:1 to 1:1. When the atomic ratio of the cation elements to the anion elements satisfies the above range, the disordered rock-salt structure may be smoothly formed.

The lithium manganese-based oxyhalide may be in the form of a primary particle and/or a secondary particle in which a plurality of primary particles are aggregated, and, in this case, a primary particle size may be in a range of 50 nm to 300 nm, preferably, 50 nm to 250 nm. When the primary particle size satisfies the above range, an effect of overcoming disadvantages of the material having low ionic conductivity may be obtained by increasing a ratio of a surface to a bulk.

Also disclosed herein is a lithium manganese-based oxyhalide may having a composition represented by [Formula 1-1] below.

[Formula 1-1] Li₁₊ₐ₁Mn_{b1}M_{c1}O₂₋ₑ₁Xₑ₁

In [Formula 1-1], M and X are the same as those defined in [Formula 1]. That is, M may be at least one selected from the group consisting of Ti, Ni, Zr, V, Co, Sn, Fe, Ir, Cr, Pb, and Ru, and may preferably be Ti, and X may be a halogen element, preferably, F.

1+a1 represents an atomic ratio of Li in the lithium manganese-based oxyhalide, wherein a1 may satisfy 0<a1≤0.2, 0.02≤a1<0.2, or 0.02≤a1≤0.15.

b1 represents an atomic ratio of Mn in the lithium manganese-based oxyhalide, wherein b1 may satisfy 0.5≤b1<1, 0.6≤b1<1, or 0.6≤b1≤0.9.

c1 represents an atomic ratio of doping element M in the lithium manganese-based oxyhalide, wherein c1 may satisfy 0<c1≤b1/2, 0.05≤c1≤b1/2, or 0.1≤c1≤b1/2.

e1 represents an atomic ratio of halogen element X in the lithium manganese-based oxyhalide, wherein e1 may satisfy 0.1≤e1≤0.5, 0.1≤e1≤0.4, or 0.1≤e1≤0.25.

The lithium manganese-based oxyhalide represented by [Formula 1-1] may have a disordered rock-salt structure phase, and may preferably be composed of a single phase of the disordered rock-salt structure. With respect to a conventional overlithiated manganese oxide, a large amount of excess lithium was required for smooth lithium movement in its structure, and this led to the formation of a large amount of transition metal-deficient oxide. A transition metal is essential for resolving instability in the structure which occurs in a positive electrode during charge (delithiation reaction), but the transition metal-deficient oxide (lithium-excess oxide) increases the structural instability. Thus, in the present invention, structural stability may be achieved by minimizing a transition metal deficiency phenomenon in the positive electrode by reducing the lithium excess amount (a1) to 0.2 at% or less, and the structural stability may be further improved by doping with the element M. As described above, since the stability in the structure of the positive electrode is achieved through low lithium excess and doping in the manganese-based oxyhalide, a structural change of the positive electrode active material during charge and discharge is suppressed, and thus, an effect of significantly improving the life characteristics may be obtained.

According to the invention, the lithium manganese-based oxyhalide has a composition represented by [Formula 1-2] below.

[Formula 1-2] Li_{0.5+a2}Mn_{b2}M_{c2}O₂₋ₑ₂Xₑ₂

In [Formula 1-2], M and X are the same as those defined in [Formula 1]. That is, M is at least one selected from the group consisting of Ti, Ni, Zr, V, Co, Sn, Fe, Ir, Cr, Pb, and Ru, and may preferably be Ti, and X is a halogen element, preferably, F.

0.5+a2 represents an atomic ratio of Li in the lithium manganese-based oxyhalide, wherein a2 satisfies 0<a2<0.5, and may satisfy 0.1≤a2<0.5, or 0.2≤a2≤0.4.

b2 represents an atomic ratio of Mn in the lithium manganese-based oxyhalide, wherein b2 satisfies 0.5≤b2<1, and may satisfy 0.6≤b2<1, or 0.65≤b2≤0.95.

c2 represents an atomic ratio of doping element M in the lithium manganese-based oxyhalide, wherein c2 satisfies 0<c2≤b2/2, and may satisfy 0.05≤c2≤b2/2, or 0.1≤c2≤b2/2.

e2 represents an atomic ratio of halogen element X in the lithium manganese-based oxyhalide, wherein e2 satisfies 0.1≤e2≤0.5, and may satisfy 0.1≤e2≤0.4, or 0.1≤e2≤0.25.

The lithium manganese-based oxyhalide having the composition represented by [Formula 1-2] may have a multi-phase structure in which a disordered rock-salt structure, a layered rock-salt structure, and a spinel structure are mixed.

In the disordered rock-salt structure, the transition metal and Li are randomly distributed and arranged at 16c and 16d octahedral sites and it usually has low rate capability because it has a limitation in that the movement of the lithium is possible only when the number of transition metals is 0 (0-TM) or 1 (1-TM) based on the 4 tetrahedral faces for the lithium movement in the structure. In contrast, in the ordered spinel structure, diffusion of lithium is easy, because all of the transition metals, such as Mn, are located at 16d octahedral sites, lithium is located at 8a tetrahedral sites, and all lithium atoms have a 0-TM Li environment in which the transition metal is not located on all tetrahedral faces. In addition, it has a characteristic of having high rate capability by structurally forming a three-dimensional lithium network. Thus, in a case in which the lithium manganese-based oxyhalide has the multi-phase structure, in which the disordered rock-salt structure and the spinel structure are mixed, as described above, an effect of improving the rate capability may be obtained in comparison to a case where the lithium manganese-based oxyhalide is only composed of the single phase of the disordered rock-salt structure.

In this case, a ratio of a spinel phase in the lithium manganese-based oxide may be in a range of 75% or less, preferably, 25% to 75%. In a case in which the ratio of the spinel phase satisfies the above range and a ratio of the rock-salt structure is increased, since the structural change of the positive electrode active material during charge and discharge is suppressed, the effect of significantly improving the life characteristics may be obtained.

Also, in X-ray diffraction (XRD) data of the lithium manganese-based oxyhalide represented by [Formula 1-2], I(400)_{R}/I(111)_{S}, a ratio of (400) plane peak intensity I(400)_{R} to (111) plane peak intensity I(111)_{S}, may be in a range of 1 or more, preferably 1 to 2, and more preferably 1 to 1.5. When I(400)_{R}/I(111)_{S} satisfies the above range, the effect of improving the life characteristics is excellent.

The lithium manganese-based oxyhalide having a disordered rock-salt structure may be synthesized by mechanochemically mixing a lithium source, a manganese source, a halogen source, and a doping element M source. For example, the lithium manganese-based oxyhalide according to the present invention may be prepared by adding a lithium source, a manganese source, a halogen source, and a doping element M source into a high-energy ball mill and then ball-mill mixing them.

As the lithium source, for example, Li₂O, Li₂O₂, Li₂MnO₃, or a combination thereof may be used, and, as the manganese source, for example, Mn₂O₃, MnO₂, Li₂MnO₃, or a combination thereof may be used, but the present invention is limited thereto. As the halogen source, for example, LiF, MnF₂, or a combination thereof may be used, and, as the doping element M source, an oxide of element M, for example, TiO₂, may be used, but the present invention is not limited thereto.

The above sources may be mixed in amounts such that atomic ratios of Li, Mn, M, and O in the lithium manganese-based oxyhalide to be finally prepared are satisfied.

Also, the ball-mill mixing may be performed for 25 hours to 50 hours at a stirring speed of 300 rpm to 600 rpm, preferably, 400 rpm to 500 rpm, and may be performed by adding two types of stainless steel balls having different sizes.

### Positive Electrode

Next, a positive electrode according to the present invention will be described.

The positive electrode according to the present invention includes a positive electrode active material layer including the positive electrode active material according to the present invention. Specifically, the positive electrode includes a positive electrode collector and a positive electrode active material layer which is formed on the positive electrode collector and includes the positive electrode active material.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

Also, the positive electrode active material layer may include a conductive agent and a binder in addition to the above-described positive electrode active material.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the positive electrode active material layer.

The binder improves the adhesion between positive electrode active material particles and the adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

The positive electrode may be prepared according to a typical method of preparing a positive electrode. For example, after a positive electrode slurry is prepared by mixing the positive electrode active material, the binder, and/or the conductive agent in a solvent and is coated on the positive electrode collector, the positive electrode may be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have viscosity that may provide excellent thickness uniformity during the subsequent coating for the preparation of the positive electrode.

As another method, the positive electrode may be prepared by casting the positive electrode slurry on a separate support and then laminating a film separated from the support on the positive electrode collector.

### Lithium Secondary Battery

Next, a lithium secondary battery according to the present invention will be described.

The lithium secondary battery of the present invention includes the positive electrode according to the present invention. Specifically, the lithium secondary battery includes a positive electrode, a negative electrode disposed to face the positive electrode, a separator disposed between the positive electrode and the negative electrode, and an electrolyte, and the positive electrode is the same as described above. Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the negative electrode active material layer.

The binder improves the adhesion between negative electrode active material particles and the adhesion between the negative electrode active material and the negative electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the negative electrode active material layer.

The negative electrode active material layer, for example, may be prepared by coating the negative electrode collector with a negative electrode slurry including the negative electrode active material as well as optionally the binder and the conductive agent and drying, or may also be prepared by casting the negative electrode slurry on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, an additive may be further included in the electrolyte. For example, as the additive, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be used alone or in a mixture thereof, but the present invention is not limited thereto. The additive may be included in an amount of 0.1 wt% to 10 wt%, preferably, 0.1 wt% to 5 wt% based on a total weight of the electrolyte.

As described above, since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.
Hereinafter, examples of the present invention will be described in detail in such a manner that it may easily be carried out by a person with ordinary skill in the art to which the present invention pertains.

### Reference Example 1

Li₂O, Li₂O₂, MnO, MnF₂, and TiO₂ were added to a PM200 high energy instrument in a weight ratio of 0.0510:0.2050:0.6118:0.1012:0.0432 and then dry-milled at 450 rpm for 33 hours in a state in which ten 5 mm stainless steel balls and five 10 mm stainless steel balls were added based on 1g batch to synthesize Li_{1.05}Mn_{0.90}Ti_{0.05}O_{1.8}F_{0.2}.

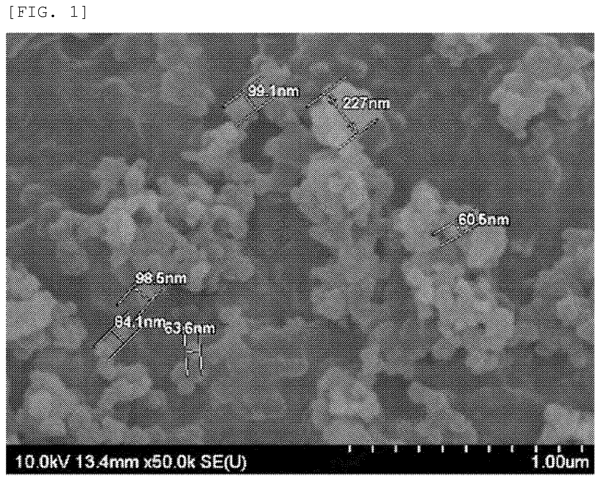

A differential scanning electron microscope image of the synthesized Li_{1.05}Mn_{0.90}Ti_{0.05}O_{1.8}F_{0.2} powder is illustrated in FIG. 1. It may be confirmed from FIG. 1 that the synthesized Li_{1.05}MN_{0.90}Ti_{0.05}O_{1.8}F_{0.2} was in the form of a secondary particle in which primary particles having a size of 50 nm to 300 nm were aggregated.

### Reference Example 2

Li₂O, Li₂O₂, MnO, MnF₂, and TiO₂ were added to a PM200 high energy instrument in a weight ratio of 0.0999:0.1302:0.5117:0.1026:0.1665 and then dry-milled at 450 rpm for 33 hours in a state in which ten 5 mm stainless steel balls and five 10 mm stainless steel balls were added based on 1g batch to synthesize Li_{1.05}Mn_{0.76}Ti_{0.19}O_{1.8}F_{0.2}.

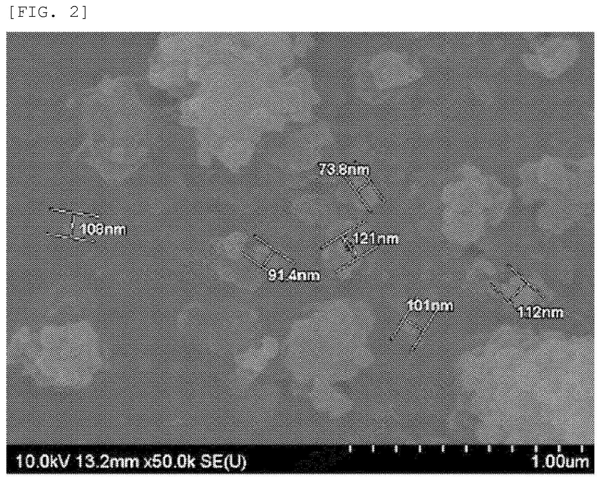

A differential scanning electron microscope image of the synthesized Li_{1.05}Mn_{0.76}Ti_{0.19}O_{1.8}F_{0.2} powder is illustrated in FIG. 2. It may be confirmed from FIG. 2 that the synthesized Li_{1.05}Mn_{0.76}Ti_{0.19}O_{1.8}F_{0.2} was in the form of a secondary particle in which primary particles having a size of 50 nm to 300 nm were aggregated.

### Comparative Example

Li₂MnO₃, Mn₂O₃, MnO₂, and MnF₂ were added to a PM200 high energy instrument in a weight ratio of 0.6029:0.2803:0.0392:0.0856 and then dry-milled at 450 rpm for 33 hours in a state in which ten 5 mm stainless steel balls and five 10 mm stainless steel balls were added based on 1g batch to synthesize Li_{0.89}Mn_{0.80}O_{1.85}F_{0.15}.

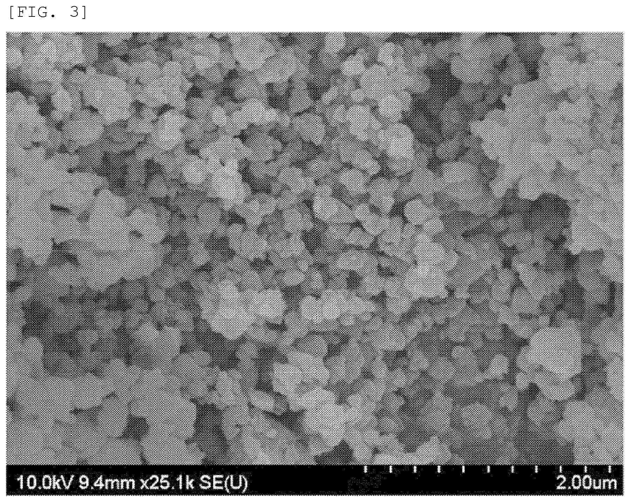

A differential scanning electron microscope image of the synthesized Li_{0.89}Mn_{0.80}O_{1.85}F_{0.15} powder is illustrated in FIG. 3. It may be confirmed from FIG. 3 that the synthesized Li_{0.89}Mn_{0.80}O_{1.85}F_{0.15} was in the form of a secondary particle in which primary particles having a size of 50 nm to 300 nm were aggregated.

### Example 3

Li₂MnO₃, Mn₂O₃, MnO₂, MnF₂, and TiO₂ were added to a PM200 high energy instrument in a weight ratio of 0.6068:0.0394:0.2023:0.0861:0.0736 and then dry-milled at 450 rpm for 33 hours in a state in which ten 5 mm stainless steel balls and five 10 mm stainless steel balls were added based on 1g batch to synthesize Li_{0.89}Mn_{0.725}Ti_{0.0750}O_{1.85}F_{0.15}.

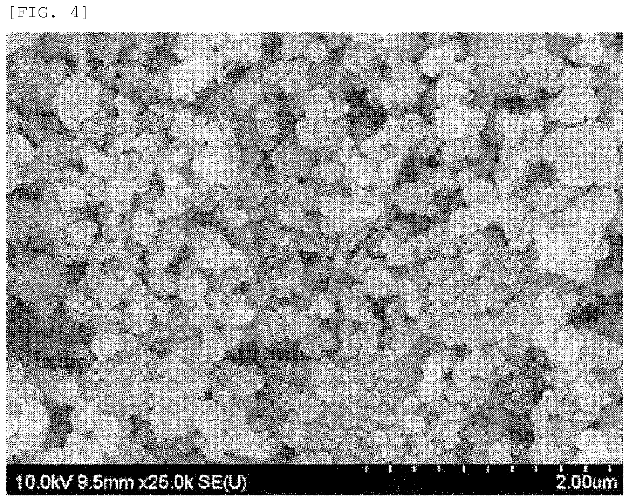

A differential scanning electron microscope image of the synthesized Li_{0.89}Mn_{0.725}Ti_{0.075}O_{1.85}F_{0.15} powder is illustrated in FIG. 4. It may be confirmed from FIG. 4 that the synthesized Li_{0.89}Mn_{0.725}Ti_{0.075}O_{1.85}F_{0.15} was in the form of a secondary particle in which primary particles having a size of 50 nm to 300 nm were aggregated.

### Example 4

Li₂MnO₃, Mn₂O₃, MnO₂, MnF₂, and TiO₂ were added to a PM200 high energy instrument in a weight ratio of 0.6107:0.0397:0.1232:0.0867:0.0148 and then dry-milled at 450 rpm for 33 hours in a state in which ten 5 mm stainless steel balls and five 10 mm stainless steel balls were added based on 1g batch to synthesize Li_{0.89}Mn_{0.65}Ti_{0.15}O_{1.85}F_{0.15}.

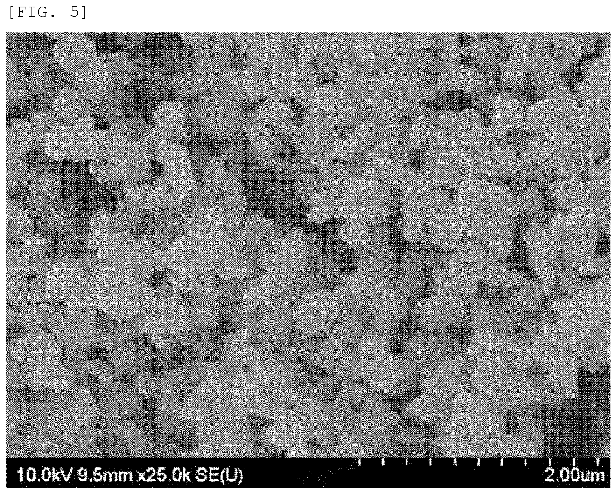

A differential scanning electron microscope image of the synthesized Li_{0.89}Mn_{0.65}Ti_{0.15}O_{1.85}F_{0.15} powder is illustrated in FIG. 5. It may be confirmed from FIG. 5 that the synthesized Li_{0.89}Mn_{0.65}Ti_{0.15}O_{1.85}F_{0.15} was in the form of a secondary particle in which primary particles having a size of 50 nm to 300 nm were aggregated.

### Experimental Example 1: Life Characteristics Evaluation

Each of the lithium manganese-based oxyhalides prepared in Reference Examples 1 and 2 and Examples 3 and 4 and Comparative Example and SUPER P were added in a weight ratio of 7:2 to a Premium Line 7 instrument by FRISTCH GmbH and then mixed at 300 rpm for 30 minutes to coat a surface of the lithium manganese-based oxyhalide with SUPER P to prepare a positive electrode active material.

The prepared positive electrode active material, a conductive agent (SUPER P), and a binder (PVDF 5120) were mixed in N-methylpyrrolidone (NMP) in a weight ratio of 7:2:1 to prepare a positive electrode material mixture, and an aluminum current collector was coated with the positive electrode material mixture, dried, and then rolled to prepare a positive electrode.

A lithium metal foil having a thickness of 0.2 mm was used as a negative electrode.

An electrode assembly was prepared by disposing a separator between the above-prepared positive electrode and negative electrode, the electrode assembly was inserted into a battery can, and an electrolyte solution was then injected to prepare a lithium secondary battery. An electrolyte, in which LiPF₆ was dissolved in a concentration of 1 M in a mixed organic solvent in which ethylene carbonate (EC) :dimethyl carbonate (DMC) were mixed in a volume ratio of 1:1, was used as the electrolyte solution.

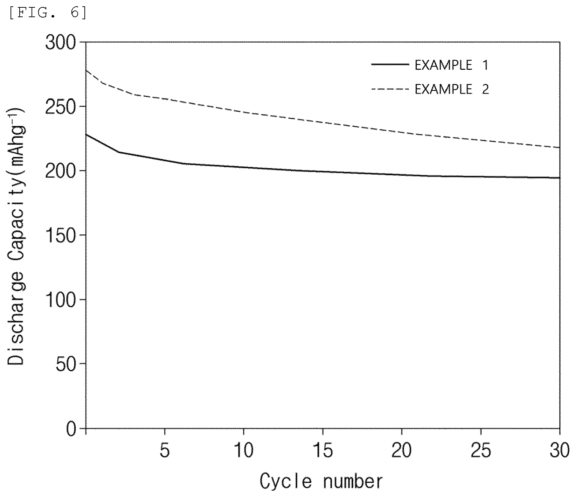

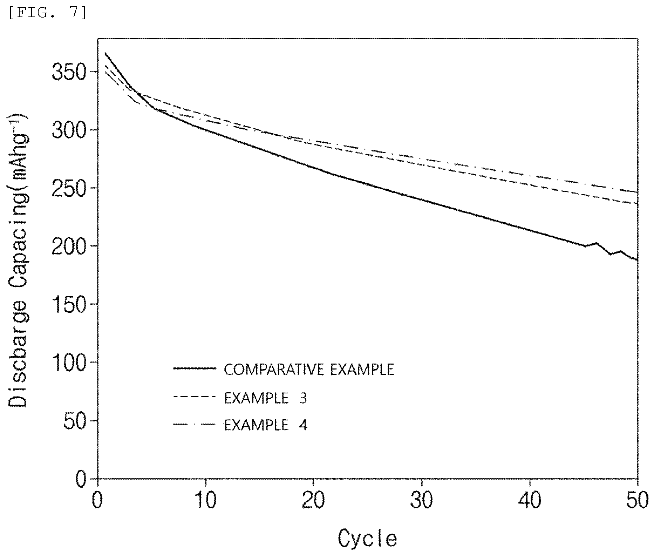

While charging of each of the above-prepared lithium secondary batteries at 0.1 C to 4.8 V in a constant current-constant voltage (CC-CV) mode at 25°C, maintaining of a CV mode until the charging current was 0.05 C or less, and discharging of each lithium secondary battery at a constant current of 0.1 C to 1.5 V were set as one cycle and 30 cycles or 50 cycles of the charging and discharging were performed, discharge capacities were measured to evaluate life characteristics. Measurement results are presented in FIG. 6 and FIG. 7.

FIG. 6 is a graph illustrating life characteristics of the lithium secondary batteries in which the lithium manganese-based oxyhalides synthesized in Reference Examples 1 and 2 were used, and FIG. 7 is a graph illustrating life characteristics of the lithium secondary batteries in which the lithium manganese-based oxyhalides synthesized in Comparative Example and Examples 3 and 4 were used.

As illustrated in FIGS. 6 and 7, the lithium secondary batteries, in which the Ti-doped lithium manganese-based oxyhalides of Reference Examples 1 and 2 and Examples 3 and 4 were used, had better life characteristics than the lithium secondary battery in which the undoped lithium manganese-based oxyhalide of Comparative Example was used.

### Experimental Example 2

A crystal structure of the lithium manganese-based oxyhalide synthesized in Example 4 was measured through high-resolution transmission electron microscopy (HR-TEM) analysis and selected area electron diffraction (SAED) analysis.

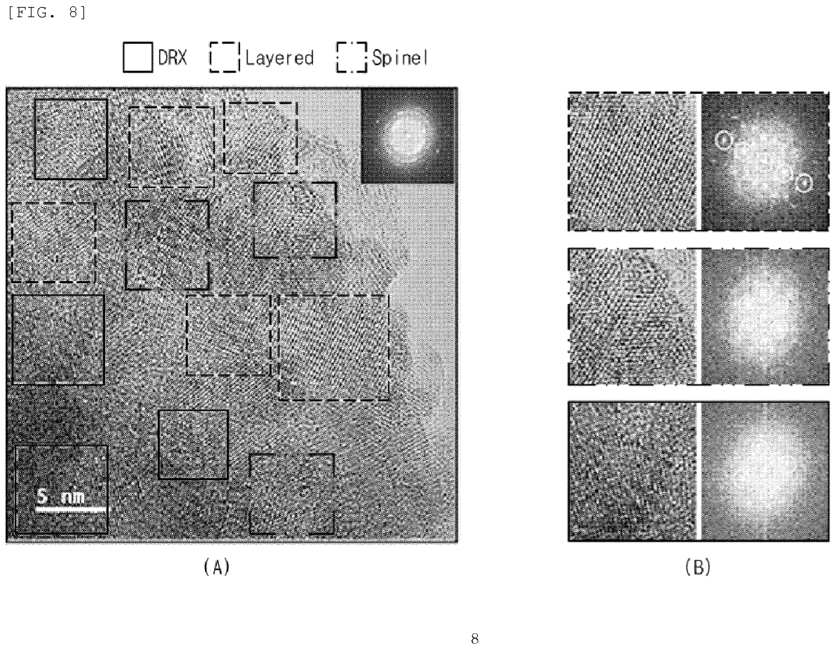

Measurement results are presented in FIG. 8. FIG. 8(A) is a high-resolution transmission electron microscope (HR-TEM) image of the lithium manganese-based oxyhalide synthesized by Example 4, and FIG. 8(B) is results of measuring SAED patterns of the lithium manganese-based oxyhalide synthesized by Example 4.

Referring to FIG. 8, it may be confirmed that the lithium manganese-based oxyhalide of Example 4 had a multi-phase in which a disordered rock-salt structure (DRX), a layered rock-salt structure, and a spinel structure were mixed.

### Experimental Example 3

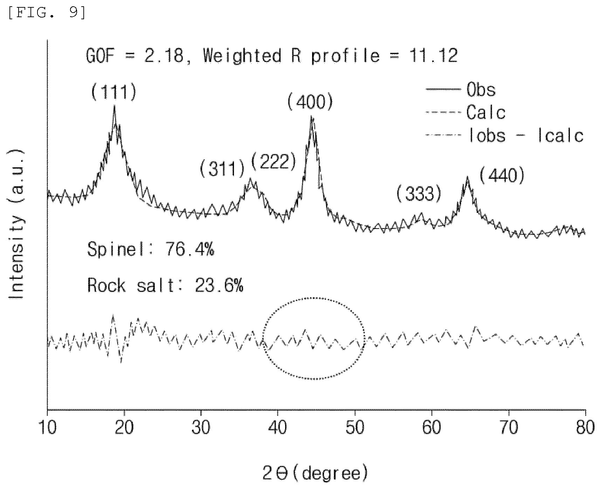

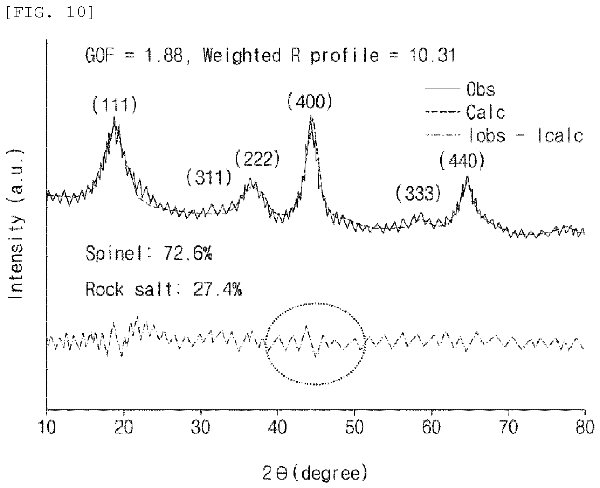

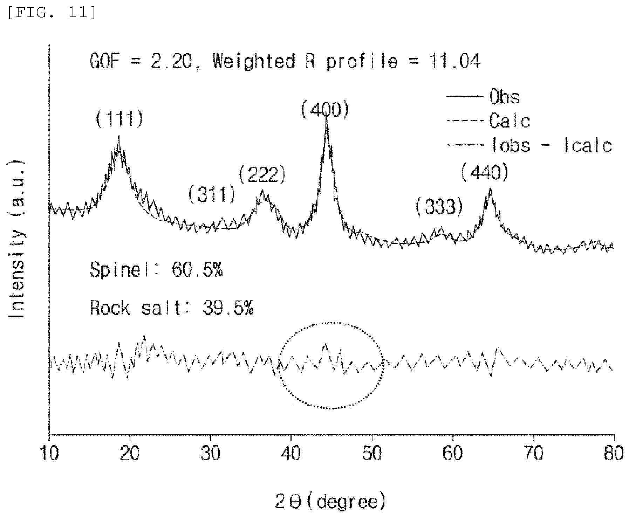

X-ray diffraction patterns of the lithium manganese-based oxyhalide powders synthesized by Comparative Example and Examples 3 and 4 were measured and presented in FIGS. 9 to 11. FIG. 9 is XRD data of Comparative Example, FIG. 10 is XRD data of Example 3, and FIG. 11 is XRD data of Example 4.

Referring to FIGS. 9 through 11, it may be confirmed that, with respect to the Ti-doped lithium manganese-based oxyhalides of Examples 3 and 4, (400)_{R} peaks appeared more dominant than (111)_{S} peaks, but, with respect to the Ti-undoped lithium manganese-based oxyhalide of Comparative Example, a (400)_{R} peak and a (111)_{S} peak had similar intensities. Specifically, a ratio of I(400)_{R}/I(111)_{S} of Example 3 was 1.95, a ratio of I(400)_{R}/I(111)_{S} of Example 4 was 1.15, and a ratio of I(400)_{R}/I(111)_{S} of Comparative Example was 0.95.

Also, as a result of measuring a ratio of the spinel phase to the rock-salt phase (disordered rock-salt phase + layered rock-salt phase) through the XRD data analysis, a ratio of the spinel phase of Example 3 was 72.6% and a ratio of the spinel phase of Example 4 was 60.5%, and a ratio of the spinel phase of Comparative Example was 76.4%, wherein it may be confirmed that the ratio of the spinel phase was reduced when Ti doping was performed.

## Claims

1. A positive electrode active material comprising a lithium manganese-based oxyhalide which has a composition represented by [Formula 1-2] and has a disordered rock-salt structure.
[Formula 1-2] Li_{0.5+a2}Mn_{b2}M_{c2}O₂₋ₑ₂Xₑ₂
wherein, in [Formula 1-2], M is at least one selected from the group consisting of Ti, Ni, Zr, V, Co, Sn, Fe, Ir, Cr, Pb, and Ru, X is a halogen element, and 0<a2<0.5, 0.5≤b2<1, 0<c2≤b2/2, and 0.1≤e2≤0.5.

2. The positive electrode active material of claim 1, wherein a molar ratio of cation elements : anion elements in the lithium manganese-based oxyhalide is in a range of 0.75 : 1 to 1 : 1.

3. The positive electrode active material of claim 1, wherein, in [Formula 1-2], M is Ti, and X is fluorine (F).

4. The positive electrode active material of claim 1, wherein the lithium manganese-based oxyhalide has a primary particle size of 50 nm to 300 nm.

5. The positive electrode active material of claim 1, wherein the lithium manganese-based oxyhalide has a multi-phase structure in which a disordered rock-salt structure, a layered rock-salt structure, and a spinel structure are mixed.

6. The positive electrode active material of claim 5, wherein a ratio of the spinel structure in the lithium manganese-based oxyhalide is 75% or less.

7. The positive electrode active material of claim 1, wherein the lithium manganese-based oxyhalide has an I(400)_{R}/I(111)_{S}, a ratio of (400) plane peak intensity I(400)_{R} to (111) plane peak intensity I(111)_{S}, of 1 or more.

8. A positive electrode comprising the positive electrode active material of any one of claims 1 to 7.

9. A lithium secondary battery comprising the positive electrode of claim 8.

## Patentansprüche

1. Positivelektrodenaktivmaterial, umfassend ein Lithium-Mangan-basiertes Oxyhalogenid, das eine Zusammensetzung, dargestellt durch [Formel 1-2], und eine ungeordnete Steinsalzstruktur aufweist.
[Formel 1-2] Li_{0,5+a2}Mn_{b2}M_{c2}O₂₋ₑ₂Xₑ₂
wobei in [Formel 1-2] M mindestens eines ist, das aus der Gruppe ausgewählt ist, die aus Ti, Ni, Zr, V, Co, Sn, Fe, Ir, Cr, Pb und Ru besteht, X ein Halogenelement ist und 0 < a2 < 0,5, 0,5 ≤ b2 < 1, 0 < c2 ≤ b2/2 und 0,1 ≤ e2 ≤ 0,5.

2. Positivelektrodenaktivmaterial gemäß Anspruch 1, wobei ein Molverhältnis von Kationenelementen :
Anionenelementen in dem Lithium-Mangan-basierten Oxyhalogenid im Bereich von 0,75 : 1 bis 1 : 1 liegt.

3. Positivelektrodenaktivmaterial gemäß Anspruch 1, wobei in [Formel 1-2] M Ti ist und X Fluor (F) ist.

4. Positivelektrodenaktivmaterial gemäß Anspruch 1, wobei das Lithium-Mangan-basierte Oxyhalogenid eine Primärpartikelgröße von 50 nm bis 300 nm aufweist.

5. Positivelektrodenaktivmaterial gemäß Anspruch 1, wobei das Lithium-Mangan-basierte Oxyhalogenid eine Multiphasenstruktur aufweist, in der eine ungeordnete Steinsalzstruktur, eine geschichtete Steinsalzstruktur und eine Spinellstruktur gemischt sind.

6. Positivelektrodenaktivmaterial gemäß Anspruch 5, wobei ein Anteil der Spinellstruktur in dem Lithium-Mangan-basierten Oxyhalogenid 75% oder weniger beträgt.

7. Positivelektrodenaktivmaterial gemäß Anspruch 1, wobei das Lithium-Mangan-basierte Oxyhalogenid ein I(400)_{R}/I(111)_{S}, ein Verhältnis von der Peakintensität I(400)_{R} der (400)-Ebene zu der Peakintensität I(111)_{S} der (111)-Ebene, von 1 oder mehr aufweist.

8. Positive Elektrode, umfassend das Positivelektrodenaktivmaterial gemäß einem der Ansprüche 1 bis 7.

9. Lithium-Sekundärbatterie, umfassend die positive Elektrode gemäß Anspruch 8.

## Revendications

1. Matériau actif d'électrode positive comprenant un oxyhalogénure au lithium-manganèse présentant une composition représentée par [Formule 1-2] et présentant une structure de type sel gemme désordonnée.
[Formule 1-2] Li_{0.5+a2}Mn_{b2}M_{c2}O₂₋ₑ₂Xₑ₂
dans lequel, dans la [Formule 1-2], M est au moins un choisi dans le groupe constitué de Ti, Ni, Zr, V, Co, Sn, Fe, Ir, Cr, Pb et Ru, X est un élément halogène, et 0<a2<0,5, 0,5≤b2<1, 0<c2≤b2/2, et 0,1≤e2≤0,5.

2. Matériau actif d'électrode positive selon la revendication 1, dans lequel un rapport molaire d'éléments cationiques: éléments anioniques dans l'oxyhalogénure au lithium-manganèse est dans une plage de 0,75:1 à 1:1.

3. Matériau actif d'électrode positive selon la revendication 1, dans lequel, dans la [Formule 1-2], M est Ti, et X est fluor (F).

4. Matériau actif d'électrode positive selon la revendication 1, dans lequel l'oxyhalogénure au lithium-manganèse présente une taille de particule primaire de 50 nm à 300 nm.

5. Matériau actif d'électrode positive selon la revendication 1, dans lequel l'oxyhalogénure au lithium-manganèse présente une structure multiphasée dans laquelle une structure de type sel gemme désordonnée, une structure de type sel gemme stratifiée et une structure de spinelle sont mélangées.

6. Matériau actif d'électrode positive selon la revendication 5, dans lequel un rapport de la structure de spinelle dans l'oxyhalogénure au lithium-manganèse est inférieur ou égal à 75 %.

7. Matériau actif d'électrode positive selon la revendication 1, dans lequel l'oxyhalogénure au lithium-manganèse présente un I(400)_{R}/I(111)_{S}, un rapport de l'intensité de pic du plan (400) I(400)_{R} à l'intensité de pic du plan (111) I(111)_{S} supérieur ou égal à 1.

8. Électrode positive comprenant le matériau actif d'électrode positive selon l'une quelconque des revendications 1 à 7.

9. Batterie secondaire au lithium comprenant l'électrode positive selon la revendication 8.
